**Europäisches Patentamt**

**European Patent Office**

**Office européen des brevets**

(19)

(11) Publication number: **0 085 235**
**B1**

(12)

# EUROPEAN PATENT SPECIFICATION

(45) Date of publication of patent specification: **08.07.87**

(21) Application number: **82306484.5**

(22) Date of filing: **06.12.82**

(51) Int. Cl.⁴: **A 22 C 17/00,** A 23 L 1/31,
A 23 B 4/00

(54) Method of preparing meat for human consumption.

(30) Priority: **25.01.82 GB 8202061**

(43) Date of publication of application:
**10.08.83 Bulletin 83/32**

(45) Publication of the grant of the patent:
**08.07.87 Bulletin 87/28**

(84) Designated Contracting States:
**AT BE CH DE FR IT LI LU NL SE**

(56) References cited:
**US-A-2 140 162**
**US-A-2 267 442**
**US-A-3 067 041**
**US-A-3 359 121**
**US-A-3 753 741**

(73) Proprietor: **Townsend Engineering (UK) Limited**
**Badminton Road Trading Estate**
**Yate Bristol (GB)**

(72) Inventor: **Proven, Philip**
**Old Wyatts Rowe Lane Seend**
**Nr. Melksham Wilts. (GB)**

(74) Representative: **Jones, Alan John et al**
**CARPMAELS & RANSFORD 43 Bloomsbury**
**Square**
**London, WC1A 2RA (GB)**

Courier Press, Leamington Spa, England.

## Description

This invention relates to a method of preparing meat for human consumption. The term meat includes meat from domestically reared animals such as cattle, pigs, sheep, deer, goat, chicken, turkey and fowl generally.

Meat is traditionally butchered by taking the dressed and chilled carcasses of the beef, pork, lamb, etc. which have been broken down into various primal and sub-primal joints and then either boned, and de-fatted or sold in pieces with the bones and fat, for eventual consumption by the purchaser.

The techniques used are long standing and traditional and although there are regional variations as to how carcasses are cut-up, the techniques that are used have been extant for several hundred years. The tools with which meat is broken down into consumer pieces have changed little in this time. Meat in many parts of the world is usually sold with fat and muscle membranes still adhering and attached to the motor muscles. The name gristle is used to describe connective tissue and muscle membrane which attaches the major muscles to the bones of locomotion. A problem which the meat trade faces and always has faced is the high cost of preparing meat when it involves the removal of fat and muscle membranes, and of course preparing it at a price which the consumer is willing to pay.

An object of the present invention is to provide a system which will improve the technique of butchering and also provide and create a very convenient way of preparing a relatively small portion of meat in a much less wasteful and uneconomic way than hitherto.

In US—A—2,140,162 there is disclosed a method of producing slices of meat from a joint of fresh meat by first freezing the joint and then cutting into slices with an automatic slicing machine which cuts through bone and tissue.

The slices are then bound together by skin or by wire in bundles of e.g. chops, steaks which are subsequently separated before cooking.

In contradistinction, in accordance with the present invention there is a method of preparing meat for subsequent cooking and human consumption by removing undesirable skin or fat, and slicing a deboned raw meat muscle across the grain of the muscle whilst retaining the meat muscle in its original shape to produce a congery of slices, characterised by this, that a proportion of the congery of slices, preferably from 4 to 12 slices, is stacked substantially in the shape of the original meat muscle with additions including fat and gravy in a closed metal foil container ready for roasting in an oven without further processing or additions.

In one form of the invention a piece of meat suitable for roasting or braising is deboned, as necessary, and then the membrane that lies underneath the fat or adipose tissue is skinned to expose the muscle fibres themselves. The meat which has been fully de-fatted and then skinned is then presented to a multi-blade cutting device which will, in one operation, cut the meat into a number of slices at right angles to the grain of the meat. The grain of the meat is formed by the fibres that run from end to end of the muscle.

Thus there is formed a cut muscle, divided into a number of slices of a thickness suitable for subsequent human consumption without further reduction in thickness, the slices being retained in their original shape even after being subject to the multiple blade cutting action.

The deskinning may be carried out for example by means of a commercially available membrane skinner. The slicing of the whole meat muscle in one operation may be carried out by means of a slicer which has reciprocating blades into which the whole muscle is propelled by means of a pushing mechanism. Typically the slicer will cut $2\frac{1}{2}$mm slices at a rate of 1200 slices per minute thus making very fast and efficient operation.

This cut muscle can then be apportioned into various weights determined by multiples of slices chosen and placed into a container which can be either oven-proof or just as a vehicle for presentation and sale and may be, for example decorated with fat or parsley etc.

The containers can then either be sold fresh or frozen, whatever the particular trader wishes and they should have sufficient shelf life to satisfy normal commercial requirements.

The invention is particularly beneficial when dealing with large cross sectional muscles for example when the butcher is attempting to sell pork legs. This particular cut is difficult to sell in the piece because of its size. Pork legs can range from 8 to 20 pounds (3.549 to 8.872 kg) in weight and most of them find their way into the bacon and ham industry, although there is a demand for fresh leg meat at retail level. With the present method of preparation the leg can be boned in a piece, cut in the manner previously described and prepared in the manner previously described and presented in a convenient form in unit weights down to 6 ozs or 7 ozs ($17.01 \times 10^{-2}$ to $19.85 \times 10^{-2}$ Kg).

Another example is leg of lamb. A particular joint weighed 5 lbs 10 ozs (2.601 Kg) in the untrimmed, bone-in state and would normally either be sold whole at around £9 or in half to produce a fillet of lamb and a knuckle end of lamb which would put its individual unit cost at around £4.50 to £5 each. This is considered expensive at the moment and the method of this invention achieved the following. When the leg was boned and trimmed, it was 14 ozs (0.395 Kg) of bone, $10\frac{1}{4}$ ozs (0.906 Kg) of fat, with leg trim of $1\frac{3}{4}$ ozs (0.0495 Kg), leaving boneless leg meat in the piece of approximately 4 lbs (1.774 Kg). The leg was then sliced as previously described, and broken down into 5 portions. This gave 5 individual joints of $11\frac{1}{2}$ ozs (0.318 Kg), 1 lb 1 oz (0.471 Kg), 1 lb $3\frac{1}{2}$ ozs (0.542 Kg), $11\frac{1}{2}$ ozs (0.318 Kg) and $10\frac{1}{4}$ ozs (0.906 Kg) respectively.

This made the leg infinitely more marketable and would give members of the meat buying public greater choice by dint of its lower unit cost, together with the total elimination of waste.

Fat may be added back into the packs to provide a medium for roasting which will produce a succulent and moist end product as it is presented on the plate.

In the case of pork, the pork skin may be removed by the de-skinner and the skin then slices to produce rind straws which are added to the sliced joint when packaged for sale. When cooked the rind straws brown to form traditional "crackling". The technique can also be used for braising meats, such as forequarter, chuck, brisket etc. The braising product can be cooked in a foil container with added vegetables or presented to the oven in the traditional way and served again very conveniently as an economical and delicious meal.

When prepared and cooked in this way the meat slices separate very easily and cleanly and can be laid out in various forms to create an appetising and appealing dish.

The technique can also be used for the so-called gammon joints or fore end joints of bacon where the meat in the cured state is again boned, sliced and then roasted or boiled in its container and/or cooking bag to its desired internal finished cooked temperature with subsequent separation of the slices to form individual portions of the desired thickness.

This method of pre-slicing the meat before cooking has a tenderising effect on the meat when cooked. This is particularly noticeable when the meat muscles are subject to cold shortening. Since the slices result in relatively short meat fibres they do not toughen as readily as they would if cooked whole.

Also we have found that the true roast flavour is retained by cooking a congery of slices together whereas if the individual slices are cooked by themselves the flavour is not the same and does not taste like normal roast meat.

Further advantages of the process are:—

Cooking time is reduced.

There is no need for stringing or netting of the meat and thus labour is reduced.

Smaller pieces may be utilized thus increasing the value taken from a given carcass.

## Claims

1. A method of preparing meat for subsequent cooking and human consumption by removing undesirable skin or fat, and slicing a deboned raw meat muscle across the grain of the muscle whilst retaining the meat muscle in its original shape to produce a congery of slices, characterised by this, that a proportion of the congery of slices, preferably from 4 to 12 slices, is stacked substantially in the shape of the original meat muscle with additions including fat and gravy in a closed metal foil container ready for roasting in an oven without further processing or additions.

2. A method according to claim 1 and characterised by this, that the slicing is done in a multi-blade cutting device which will, in one operation cut the meat into a number of slices at right angles to the grain of meat.

## Patentansprüche

1. Verfahren, um Fleisch für ein darauffolgendes Braten und den menschlichen Genuß zuzubereiten, wobei unerwünschte Haut oder Fett entfernt und ein rohes Muskelfleisch, dem die Knochen entnommen wurden, quer zur Faserrichtung des Muskels in Scheiben geschnitten wird, wobei das Muskelfleisch seine ursprüngliche Form beibehält, um eine Reihe von Scheiben herzustellen, dadurch gekennzeichnet, daß ein Teil der Reihe von Scheiben, vorzugsweise von vier bis zwölf Scheiben, im wesentlichen in der Form des ursprünglichen Muskelfleischs mit Zutaten, die Fett und Fleischsaft enthalten, in einem geschlossenen Metallfolienbehälter gestapelt wird, wobei sie für das Braten in einem Ofen bereit sind, ohne daß eine weitere Verarbeitung oder weitere Zutaten notwendig sind.

2. Verfahren gemäß Anspruch 1, dadurch gekennzeichnet, daß das Schneiden in einer Schneidevorrichtung mit mehreren Messern erfolgt, die im Betrieb das Fleisch senkrecht zur Faserrichtung in eine Anzahl von Scheiben schneidet.

## Revendications

1. Un procédé de préparation de la viande pour la cuisson ultérieure et la consommation humaine qui consiste à enlever la peau ou la graisse indésirable et à découper en tranches un muscle de viande brut désossé à travers le grain du muscle tout en conservant la forme originelle du muscle de viande en produisant une pile de tranches, caractérisé en ce qu'une proportion de la pile de tranches, de préférence 4 à 12 tranches, est empilée pratiquement sous la forme du muscle de viande originel, avec des additions, comportant de la graisse et du jus, dans un récipient en feuille métallique fermé prêt au rôtissage dans un four sans autre traitement ou additions.

2. Procédé selon la revendication 1, caractérisé en ce que le découpage en tranches s'effectue dans un appareil à trancher à lames multiples qui, en une opération, découpe la viande en un certain nombre de tranches perpendiculairement au grain de la viande.